# EUROPEAN PATENT SPECIFICATION

(11) **EP 4 326 106 B1**
(45) Date of publication and mention of the grant of the patent: **19.02.2025**
(21) Application number: 22723664.3
(22) Date of filing: 20.04.2022
(51) Int. Cl.: A24F 40/40, A24F 40/20

(54) **AEROSOL GENERATING DEVICE COMPRISING AN EXPANDABLE CONTAINER**
VERDAMPFER MIT AUSDEHNBAREN BEHÄLTER
DISPOSITIF DE GÉNÉRATION D'AÉROSOL AVEC RÉCIPIENT EXTENSIBLE

(30) Priority: 20.04.2021 EP 21169320
(43) Date of publication of application: 28.02.2024
(73) Proprietor: JT International S.A., 1202 Genève (CH)
(72) Inventor: MONTICONE, Pier Paolo, 1218 LE GRAND SACONNEX (CH)
(74) Representative: Lavoix
(86) International application number: PCT/EP2022/060434
(87) International publication number: WO 2022/223628

(56) References cited:
- WO-A1-2017/186455
- WO-A1-2019/101947
- WO-A1-2021/044023
- GB-A- 2 534 211

## Description

### FIELD OF THE INVENTION

The present invention concerns an aerosol generating device comprising an expandable container.

The aerosol generating device according to the invention is configured to operate with a consumable article comprising for example a solid substrate, also known as aerosol forming substrate, able to form aerosol when being heated. Thus, such type of aerosol generating devices, also known as heat-not-burn devices, is adapted to heat, rather than burn, the substrate by conduction, convection and/or radiation, to generate aerosol for inhalation.

### BACKGROUND OF THE INVENTION

The popularity and use of reduced-risk or modified-risk devices (also known as vaporisers) has grown rapidly in the past few years as an aid to assist habitual smokers wishing to quit smoking traditional tobacco products such as cigarettes, cigars, cigarillos, and rolling tobacco. Various devices and systems are available that heat or warm vaporizable substances as opposed to burning tobacco in conventional tobacco products.

Some examples of known aerosol generating devices are disclosed in WO 2017/186455, WO 2021/044023 A1, GB 2 534 211 A and WO 2019/101947 A1.

A commonly available reduced-risk or modified-risk device is the heated substrate aerosol generation device or heat-not-burn device. Devices of this type generate aerosol or vapour by heating an aerosol substrate that typically comprises moist leaf tobacco or other suitable vaporizable material to a temperature typically in the range 150°C to 350°C. Heating an aerosol substrate, but not combusting or burning it, releases aerosol that comprises the components sought by the user but not the toxic and carcinogenic byproducts of combustion and burning. Furthermore, the aerosol produced by heating the tobacco or other vaporizable material does not typically comprise the burnt or bitter taste resulting from combustion and burning that can be unpleasant for the user and so the substrate does not therefore require the sugars and other additives that are typically added to such materials to make the smoke and/or vapour more palatable for the user.

In order to be able to form aerosol while heating an aerosol forming substrate, the aerosol forming devices define generally a heating chamber designed to receive and heat the aerosol forming substrate. The difficulty while using such way of heating consists in a low thermal conductivity of the substrate. This results in long heating time, low energy efficiency, and a bulky device design.

It was observed that the problem of low thermal conductivity of the substrate is mainly due to a large amount of air trapped in it. Thus, this problem can be at least partially solved by compressing the aerosol forming substrate by suitable compressing means so that the most of the trapped air is removed. However, the compressing means known in the art can impose numerous constrains while using the aerosol generating device. Particularly, in some cases, insertion and/or extraction to/from the device of the consumable article can be rendered laborious by the compressing means. In some other cases, the compressing means require a manual mechanical action which cannot be always performed by the user with the required effort. In some other cases, the compressing means may require an electrical supply that increases battery consumption and render more complex the internal electrical circuitry of the device.

### SUMMARY OF THE INVENTION

One of the aims of the invention is to provide an aerosol generating device allowing compressing of an aerosol forming substrate without imposing additional constrains to the device.

For this purpose, the invention relates to an aerosol generating device configured to operate with a consumable article, comprising:
- a heating chamber configured to receive and heat at least a part of the consumable article, the heating chamber comprising at least one moveable element;
- an expandable container containing a heat expandable material and configured to cause, by expansion of the heat expandable material, the moveable element to compress said part of the consumable article when it is received in the heating chamber and when the heating chamber is operated to heat said part of the consumable article.

Using of an expandable container containing a heat expandable material makes it possible to compress "automatically" the aerosol forming substrate of the consumable article while its heating. It means that no additional action is required from the user and no battery power is needed to perform the compression. Particularly, the nature of the expandable material and/or the dimensions and/or the arrangement of the expandable material can be chosen so as to ensure an optimal compression rate of the substrate while it is being heated. Additionally, the compression rate may be correlated to the temperature of the aerosol forming substrate. For example, when the substrate is not being heated, the compression rate may be substantially equal to zero, whereas when the substrate is heated to its maximal temperature, the compression rate may also achieve its maximal value.

According to some embodiments, the heat expandable material is sealed inside the expandable container.

Thanks to these features, the heat expandable material can be completely isolated from the aerosol forming substrate and the aerosol formed during the heating. This prevents any deterioration of the aerosol taste or other properties while heating the substrate and the heat expandable material.

According to some embodiments, the heat expandable material is an alkane.

According to some embodiments, the heat expandable material is a paraffin wax.

Thanks to these features, the heat expandable material presents a good expansion rate at the right temperature range (during for example the pre-heating phase) and is low cost. Additionally, it is a food grade material and sustains peak temperatures of the heater.

According to some embodiments, the heat expandable material is chosen to expand during a pre-heating phase of operation of the heating chamber.

Thanks to these features, the maximal compression rate can be achieved when the aerosol generating device is ready to be used.

According to some embodiments, the moveable element forms an actuator configured to extend from a wall of the heating chamber.

Thanks to these features, the compression can be achieved using an element independent from the walls of the heating chamber.

According to some embodiments, the moveable element forms a wall of the heating chamber connected to an actuator.

Thanks to these features, it is possible to achieve a compression extending along substantially the whole surface of the aerosol generating substrate that ensures the optimal aerosol generation.

According to some embodiments, said actuator is configured to slide in a cavity further to expansion of the expandable container.

Thanks to these features, the expansion effort of the expandable container can be fully transmitted into a concentrated effort along a unique direction.

According to some embodiments, the moveable element is formed by a wall of the expandable container.

Thanks to these features, it is possible to achieve a compression extending along substantially the whole surface of the aerosol generating substrate that ensures the optimal aerosol generation. Additionally, in this case, a better compression can be achieved since the shape of the wall of the expandable container can follow precisely the external shape of the consumable article.

According to some embodiments, the moveable element forms a wall of the heating chamber in contact with a wall of the expandable container.

Thanks to these features, the expansion effort from the container can be fully transmitted to the whole wall of the heating chamber.

According to some embodiments, the expandable container forms a thermal insulator between the heating chamber and an external surface of the device.

Thanks to these features, the expandable container acts additionally as an insulator which makes it possible to insulate the heating chamber from the external surface of the aerosol generating device.

According to some embodiments, the expandable container defines at least one elastic wall or membrane able to change its shape depending on an expansion rate of the heat expending material.

Thanks to these features, it is possible to achieve a better compression by adapting the shape of the expandable container to the corresponding contact surface.

According to some embodiments, the heating chamber extends along a chamber axis between a closed end and an open end, the open end defining an opening extending perpendicularly to the chamber axis;
the moveable element being moveable substantially perpendicularly to the chamber axis.

Thanks to these features, it is possible to achieve a better compression for consumable articles presenting an elongated shape.

According to some embodiments, the heating chamber further comprises at least one heating element, said heating element forming a heating blade arranged inside the heating chamber or one or several heating resistances integrated in the movable element or a coil arranged around the heating chamber.

Thanks to these features, various types of heaters can be used to heat the aerosol forming substrate.

According to some embodiments, the heating chamber defines at least two moveable elements facing each other.

Thanks to these features, the aerosol forming substrate can be compressed in several portions to increase aerosol generating performances.

### BRIEF DESCRIPTION OF THE DRAWINGS

The invention and its advantages will be better understood upon reading the following description, which is given solely by way of non-limiting example and which is made with reference to the appended drawings, in which:
- Figure 1 is a cross-sectional schematic view of an aerosol generating device according to a first embodiment of the invention, the aerosol generating device receiving a consumable article;
- Figure 2 is a view similar to the view of Figure 1 where a part of the consumable article is compressed while being heated;
- Figure 3 is a cross-sectional schematic view of an aerosol generating device according to a second embodiment of the invention, the aerosol generating device receiving a consumable article;
- Figure 4 is a view similar to the view of Figure 3 where a part of the consumable article is compressed while being heated;
- Figure 5 is a cross-sectional schematic view of an aerosol generating device according to a third embodiment of the invention, the aerosol generating device receiving a consumable article;
- Figure 6 is a view similar to the view of Figure 5 where a part of the consumable article is compressed while being heated;
- Figure 7 is a cross-sectional schematic view of an aerosol generating device according to a fourth embodiment of the invention, the aerosol generating device receiving a consumable article;
- Figure 8 is a view similar to the view of Figure 7 where a part of the consumable article is compressed while being heated.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"aerosol generating device"** or **"device"** may include a vaping device to deliver an aerosol to a user, including an aerosol for vaping, by means of a heater element explained in further detail below. The device may be portable. "Portable" may refer to the device being for use when held by a user. The device may be adapted to generate a variable amount of aerosol, e.g. by activating the heater element for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation to enable a variable amount of vapour to be provided (so as to mimic the effect of smoking a conventional combustible smoking article such as a cigarette, cigar or pipe, etc.). The device may include a temperature regulation control to drive the temperature of the heater and/or the heated aerosol generating substance (aerosol pre-cursor) to a specified target temperature and thereafter to maintain the temperature at the target temperature that enables efficient generation of aerosol.

As used herein, the term **"aerosol forming substrate"** or **"substrate"** may refer to a material which may for example comprise nicotine or tobacco or any other smokable material, and an aerosol former. Tobacco may take the form of various materials such as shredded tobacco, granulated tobacco, tobacco leaf and/or reconstituted tobacco. Suitable aerosol formers include: a polyol such as sorbitol, glycerol, and glycols like propylene glycol or triethylene glycol; a non-polyol such as monohydric alcohols, acids such as lactic acid, glycerol derivatives, esters such as triacetin, triethylene glycol diacetate, triethyl citrate, glycerin or vegetable glycerin. In some embodiments, the aerosol former may be glycerol, propylene glycol, or a mixture of glycerol and propylene glycol. The substrate may also comprise at least one of a gelling agent, a binding agent, a stabilizing agent, and a humectant.

As used herein, the term **"aerosol"** may include a suspension of aerosol forming substrate as one or more of: solid particles; liquid droplets; gas. Said suspension may be in a gas including air. Aerosol herein may generally refer to/include a vapour. Aerosol may include one or more components of the aerosol forming substrate.

As used herein, the term **"heat expandable material"** or **"expandable material"** may refer to any material able to increase its volume while being heated. Particularly, such a material presents an expansion rate greater than 1 while it is being heated within a predetermined temperature range.

By **"expansion rate",** it is understood the ratio between an expanded volume of the heat expandable material and a reference volume. The reference volume may correspond to the volume of the heat expandable material under ambient temperature. Said predetermined temperature range corresponds substantially to the heating temperature range of the aerosol forming precursor and may extend from a first value corresponding substantially to the ambient temperature until a second value corresponding to the maximal heating temperature of the aerosol forming substrate. The second value can thus be comprised in the interval extending from 180°C until 400°C, preferably from 200°C until 350°C. Within said predetermined temperature range, the expansion can increase following a complex curve which depends for example on geometrical factors. Typically, it can have an "S" shape comprising three increasing segments: initial segment with moderate expansion (inferior portion of the "S"), middle segment with the most significant expansion (ascending portion of the "S") and final segment with moderate expansion (superior portion of the "S"). The middle segment can be defined between the maximum ambient temperature, e.g. 40°C, and the minimal temperature of the device's heater during the vaping session, e.g. 200°C. According to some embodiments, the first two segments can correspond to a pre-heating phase of the aerosol forming substrate. Depending on the nature of the expandable material, the middle segment can further comprise a phase change point, such a melting point. Typically, the melting point can be about 50°C -70°C.

As used herein, the term **"preheating phase",** it is understood an initial phase of operation of the aerosol generating device which is necessary to heat the aerosol forming substrate to be able to generate aerosol. Particularly, during the preheating phase, the aerosol forming device is configured to heat the aerosol forming substrate from the ambient temperature until a temperature allowing aerosol generation. This last temperature may be comprised in the interval extending from 180°C until 400°C, preferably from 200°C until 350°C. After the preheating phase, the aerosol generating device can be adapted to heat the aerosol forming substrate to maintain for example a constant temperature of the substrate or to follow a predetermined temperature profile.

As used herein, the term **"alkane"** or **"paraffin"** or **"acyclic saturated hydrocarbons"** may refer to a material mainly comprising chemical elements consisting of hydrogen and carbon atoms arranged in a structure, for example a linear periodical srtucture, in which all the carbon-carbon bonds are single. Said chemical elements have the general chemical formula CₙH₂ₙ₊₂.

As used herein, the term **"paraffin wax", "petroleum wax"** or **"wax"** may refer to a material mainly comprising a mixture of hydrocarbon molecules containing between twenty and forty carbon atoms. According to the preferred embodiment, such a mixture comprises 24 carbon atoms and has thus the general chemical formula C₂₄H₅₀.

### FIRST EMBODIMENT OF THE INVENTION

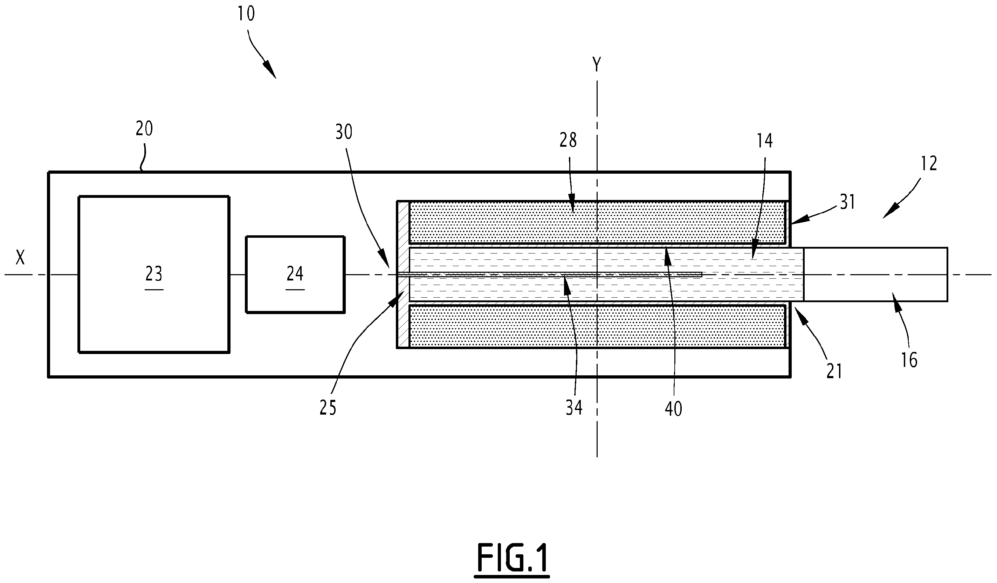

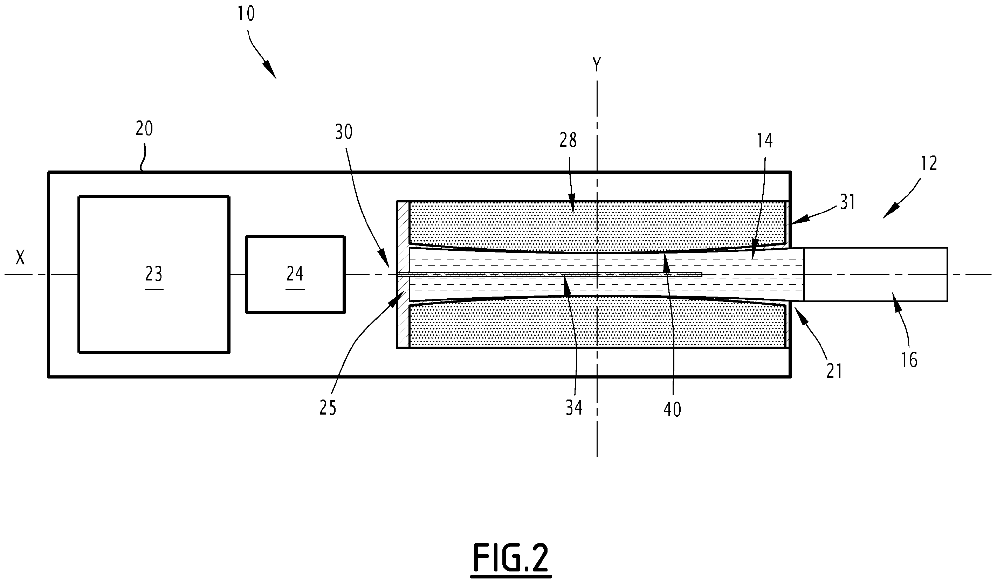

An aerosol generating device 10 according to the first embodiment of the invention is shown on Figures 1 and 2. This aerosol generating device 10 is designed to operate with a consumable article 12 also shown on these figures.

Particularly, as it is shown on Figure 1, the consumable article 12 comprises a substrate portion 14 and a filter portion 16. Both portions 14, 16 can be wrapped using a unique wrapper attaching these portions together. In other examples, the portions 14, 16 may be wrapped by different wrappers and fixed one to the other by any other suitable mean. The or each wrapper may, for example, comprise paper and/or non-woven fabric and/or aluminium. The or each wrapper may be porous or air impermeable. The consumable article 12 can have a generally tubular shape defining for example a circular cross-section. According to another example, the consumable article 12 defines a rectangular cross-section.

The substrate portion 14 contains an aerosol forming substrate intended to be heated by a heating chamber of the aerosol generating device 10 as it will be explained in further detail below. Additionally, according to some examples, the substrate portion 14 may comprise one or several susceptors integrated into the aerosol forming substrate. The susceptors may be formed from electrical conductor materials able to generate eddy currents when placed within a magnetic field. Eddy currents cause the susceptors to generate heat suitable for heating the aerosol forming substrate to generate aerosol. The magnetic field can be generated by a coil comprised in a heating system of the aerosol generating device 10. The substrate portion 14 may comprise two or more adjacent segments with at least an upstream segment containing an aerosol forming substrate and a downstream segment forming spacer or cooling segment. The downstream segment can be a tube, for example, made of paper or other rigid material such as PLA material. The tube may be hollow or partially filled or reinforced by internal, e.g. radial and/or longitudinal, walls.

The filter portion 16 comprises a core acting for example like a filter. The core may for example be a foam, or packed strands or fibres. In some examples, the filter portion 16 can form a mouthpiece intended to be in contact with the user's lips and/or mouth while using the device 10. In some other examples, the filter portion 16 can be inserted into a separate mouthpiece intended to be in contact with the user's lips and/or mouth. According to some other examples, the consumable article 12 can comprise only the substrate portion 14.

The aerosol generating device 10 comprises a housing 20 defining an insertion opening 21 suitable for insertion of the consumable article 12. The housing 20 delimits an internal space of the device 10 receiving various elements designed to carry out different functionalities of the device 10. This internal space can for example receive a battery 23 for powering the device 10, a control module 24 for controlling the operation of the device 10, a heating chamber 25 configured to receive and heat at least a part of the consumable article 12, and an expendable container 28 configured to cause compression of the consumable article 12 when it is partially received in the heating chamber 25. Among these elements, only the heating chamber 25 and the expendable container 28 will be explained in further detail. The other elements, as for example the battery 23 and the control module 24, can be implemented using known techniques.

The heating chamber 25 extends along a chamber axis X between a closed end 30 and an open end 31, and has substantially the same cross-sectional shape as the consumable article 12. The open end 31 opens to the insertion opening 21 of the housing 20. As it is shown on Figure 1, the heating chamber 25 is adapted to receive the substrate portion 14 of the consumable article 12 through the open end 31 so as this substrate portion 14 extends inside the heating chamber along the chamber axis X. Additionally, as mentioned above, the heating chamber 25 is adapted to heat at least a part of the substrate portion 14.

For this purpose, the heating chamber 25 comprises a heating element 34 which is formed in the example of Figure 1 by a heating blade. Such a heating blade is configured to penetrate inside the substrate portion 14 of the consumable article 12 while its insertion. The operation of the heating element 34 may be controlled by the control module 24 using control methods known *per se.* According to another example, the heating element 34 is formed by a coil arranged around the heating chamber 25 and able to create a magnetic field inside the chamber 25 which is controlled by the control module 24. In this case, the substrate portion 14 of the consumable article 12 includes one or several susceptors explained above. According to still another example, the heating chamber 25 may comprise one or several heating elements 34 formed by heating resistances integrated into at least one wall of the heating chamber 25 and designed to be in contact with the substrate portion 14. As in the previous examples, the operation of these heating elements 34 is controlled by the control module 24.

The heating chamber 25 further comprises at least one moveable element configured to compress at least a part of the substrate portion 14 of the consumable article 12 when the chamber 25 heats this portion 14. Particularly, the moveable element is configured to exert force on said part of the substrate portion 14 according to at least a transversal axis Y perpendicular to the chamber axis X.

According to the first embodiment of the invention, the moveable element is formed by at least one wall of the heating chamber 25 which is formed by at least one wall of the expandable container 28. Particularly, according to the first embodiment of the invention, the moveable part of the heating chamber 25 is formed by a wall 40 of the expandable container 28, referenced hereinafter as a compressing wall 40. This compressing wall 40 is intended to be in contact with the substrate portion 14 of the consumable article 12 when it is inserted into the heating chamber 25.

Additionally, according to the example of the first embodiment shown on Figures 1 and 2, the expandable container 28 forms a cylindrical shape extending along the chamber axis X and defining a through hole delimited by an internal wall forming the compressing wall 40. In other words, this compressing wall 40 forms a lateral wall delimiting laterally, i.e. along the chamber axis X, the heating chamber 25. Thus, according to this example, the compressing wall 40 is intended to be in a circumferential contact with the substrate portion 14 of the consumable article 12 and consequently, compress circumferentially this portion 14 when being heated.

According to other examples of the first embodiment of the invention, the expandable container 28 has any other suitable shape defining at least one wall forming at least partially a lateral wall of the heating chamber 25. In other words, according to these examples, the expandable container 28 can have any suitable shape defining at least a wall designed to be in contact with at least a part of the substrate portion 14 of the consumable article 12 when it is received in the heating chamber 25. For example, the expendable container 28 can form a half-cylindrical shape designed to extend partially around the substrate portion 14.

The expandable container 28 is filled with a heat expandable material which can be an alkane and preferably paraffin wax. Under the ambient temperature, i.e. under the temperature comprised for example between 0°C and 30°C, the volume of the heat expandable material is for example 4 or 5 times greater than the desired volume change induced by the compression of the aerosol forming substrate of the substrate portion 14 and notably, of the upstream segment of the substrate portion 14 in the case where an upstream segment and a downstream segment are defined as explained above. In a general case, the amount of the heat expandable material, its nature and the geometry of the expandable container 28 are chosen so as to ensure an optimal expansion rate of the expandable container 28 (or an optimal compression rate of the heat substrate portion 14) in a predetermined temperature range. As mentioned above, the predetermined temperature range corresponds substantially to the heating temperature range of the aerosol forming precursor and may extend from a first value corresponding substantially to the ambient temperature until a second value corresponding to the maximal heating temperature of the aerosol forming substrate. The second value can thus be comprised in the interval extending from 180°C until 400°C, preferably from 200°C until 350°C. Moreover, said temperature range can comprise a segment corresponding to a pre-heating phase of the aerosol generating substrate. For example, in case of using of paraffin wax, its melting point and the most significant expansion can be comprised in the interval from 50°C to 70°C. This interval is comprised in the pre-heating phase of the substrate 14 so as when the user starts the vaping session, the expandable container 28 can ensure the optimal compression rate of the substrate 14. When the user finishes the vaping session, the expandable material is cooled down and the expandable container 28 can take it initial shape an release the substrate portion 14.

The optimal compression rate of the heat substrate portion 14 is determined according to the nature of the aerosol forming substrate comprised therein ant notably, according to the volume of air trapped in the aerosol forming substrate. The optimal compression rate ensures for example the optimal aerosol generation and can for example be determined empirically.

The compressing wall 40 of the expandable container 28 is able to expand with expanding of the heat expandable material according to the transversal axis Y as it is shown on Figure 2. Thus, the compressing wall 40 is able to compress the substrate portion 14 of the consumable article 12 along substantially the whole contact area with the compressing wall 40. According to another example, the compressing wall 40 is configured to compress only a part of the substrate portion 14. For example, when the substrate portion 14 comprises an upstream segment and a downstream segment, the compressing wall 40 is configured to compress only the upstream segment of the compressing wall 40. In this case, the compressing wall 40 can extend only face to the upstream segment or define an elastic part facing this upstream segment.

The compressing wall 40 is made at least partially of a flexible material, preferably an elastic material. Particularly, the compressing wall 40 can be made of typical food-grade, elastic, and high-temperature resistant rubbers as silicone or fluorocarbons. In some examples, the compressing wall 40 is the only wall of the expandable container 28 made of an elastic material and the other walls of the expandable material 28 are rigid. According to some other examples, all of the walls of the expandable container 28 are made of an elastic material. In this last case, the expansion of other walls of the expandable container 28 can be limited/constrained by the mechanical structure of the device 10 and notably by the mechanical structure of the housing 20.

According to some examples of the first embodiment of the invention (not shown), the compressing wall 40 can comprise one or several flexible heating resistances able to heat the substrate portion 14. Particularly, in this case, the heating resistances can be integrated in the compressing wall 40 while its manufacturing. For example, the heating elements can be embedded in the elastic material of the compressing wall 40, for example by overmoulding.

Advantageously, according to the invention, the expandable container 28 is sealed. The sealing can be performed during the manufacturing of the device 10 before insertion of the expandable container 28 inside the housing 20 or after. Particularly, in the first case, the heat expandable material can be first introduced into the expandable container 28, the expandable container 28 can be then sealed and inserted inside the housing 20. In the second case, the expandable container 28 can be first inserted inside the housing 20 and then be filled with the heat expandable material and sealed.

### SECOND EMBODIMENT OF THE INVENTION

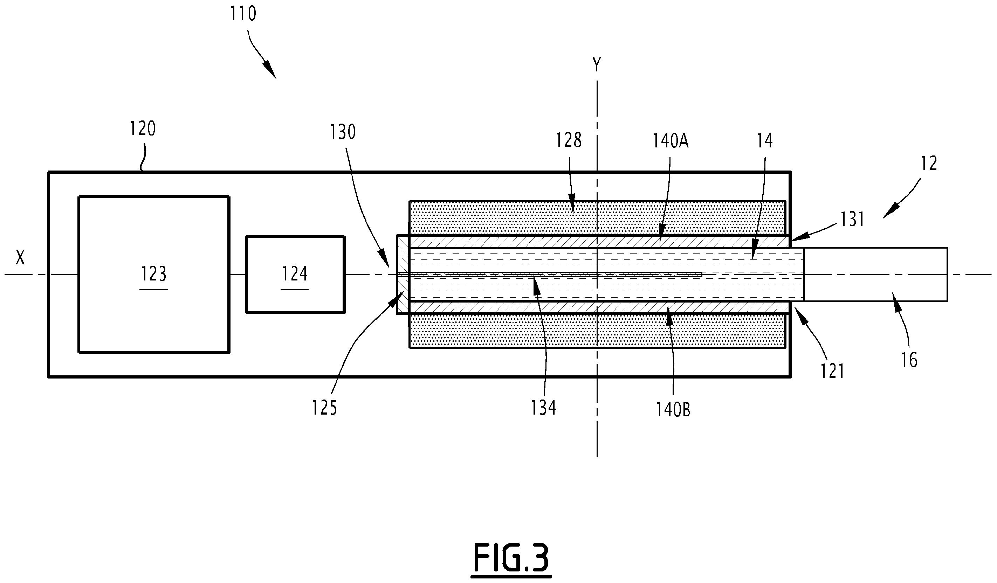

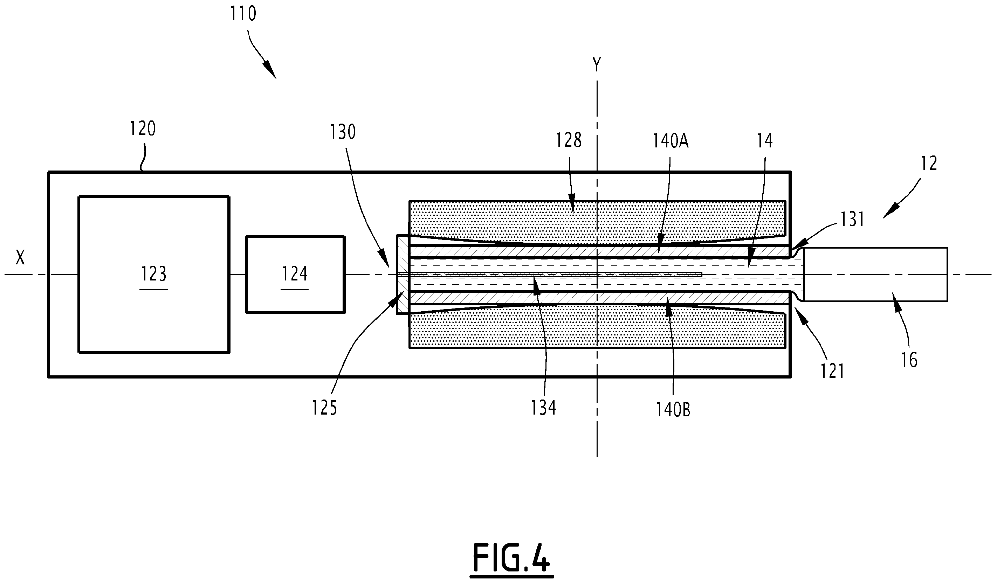

An aerosol generating device 110 according to the second embodiment of the invention is shown on Figures 3 and 4. This aerosol generating device 110 is designed to operate with the same consumable article 12 explained in relation with the previous embodiment.

Additionally, as in the previous case, the aerosol generating device 110 comprises a housing 120 defining an insertion opening 121 suitable for insertion of the consumable article 12 and comprising notably a battery 123, a control module 124, a heating chamber 125 and an expandable container 128. The battery 123 and the control module 124 are similar to the battery 23 and the control module 24 explained above. Moreover, as in the previous case, the heating chamber 125 is configured to receive and heat at least a part of the consumable article 12 and extends along a chamber axis X between a closed end 130 and an open end 131. The heating chamber 125 comprises a heating element 134 and at least one moveable element configured to compress at least a part of the substrate portion 14 of the consumable article 12 when the chamber 125 heats this portion 14. Finally, as in the previous case, the heating element 134 may also be formed for example by a heating blade (as shown on Figures 3 and 4) or by a coil or by one or several heating resistances integrated into at least one wall of the heating chamber 125.

Contrary to the previous case, according to the second embodiment of the invention, the or each moveable element of the heating chamber 125 is formed by a slidable wall of this heating chamber 125 in contact with the expandable container 128. Particularly, in the example of Figures 3 and 4, the heating chamber 125 comprises two moveable elements formed by its opposite slidable walls 140A, 140B, each slidable wall 140A, 140B being in contact with the expandable container 128. This configuration can be notably used when the heating chamber 125 and the consumable article 12 have a rectangular cross-section. According to other examples of this embodiment, the number of slidable walls can be greater than 2. Each of the slidable walls can be in contact with the expandable container and is configured to compress at least a part of the substrate portion 14 further to expansion of the expandable container 128.

According to the example of Figures 3 and 4, each slidable wall 140A, 140B is slidable along the transversal axis Y while expansion of the expendable container 128. Particularly, according to this example, each slidable wall 140A, 140B defines an internal surface delimiting partially the heating chamber 125 and intended to be in contact with at least a part of the substrate portion 14, and an external surface in contact with at least one wall of the expandable container 128. For example, when the substrate portion 14 comprises an upstream segment and a downstream segment, each slidable wall 140A, 140B can be configured to be in contact only with the upstream segment. Additionally, each slidable wall 140A, 140B can be mounted on guiding means (not shown) allowing sliding of this wall along the transversal axis Y between a first position (shown on Figure 3) wherein the substrate portion 14 can be received in the heating chamber 125 and extracted therefrom, and a second position (shown on Figure 4) wherein this portion 14 is compressed between the slidable walls 140A, 140B. Thus, in the example of these figures, the walls 140A, 140B are slidable in opposite directions.

Each slidable wall 140A, 140B is configured to slide from the first position to the second position with expansion of the expandable container 128. Additionally, in some examples, the housing 120 may comprise biasing means configured to cause each slidable wall 140A, 140B to return from the second position to the first position when the expandable container 128 is not expanded. According to some other examples, each slidable wall 140A, 140B is configured to return from the second position to the first position when the user extracts the consumable article 12 from the device 110.

As in the previous embodiment, according to some examples of the second embodiment, one or several heating resistances can be integrated into the walls 140A, 140B to heat the aerosol forming substrate.

The expandable container 128 may be similar to the expandable container 28 explained above. Particularly, as in the previous case, the expandable container 128 contains a heat expandable material causing the container expansion while being heated. For this purpose, the expandable container 128 defines at least one elastic wall able to cause sliding of the slidable walls 140A, 140B into their second position. According to the second embodiment of the invention, the expandable container 128 is arranged in a cavity between the heating chamber 125 and an internal surface of the housing 120.

Like in the previous embodiment, the expandable container 128 can present a cylindrical shape with a through hole making it possible its arrangement around the heating chamber 125. According to another example, the expandable container 128 can form two independent parts, each part being arranged between the internal surface of the housing 120 and the corresponding wall 140A, 140B of the heating chamber 125. According to this example, each part of the expandable container 128 can acts independently on the corresponding sliding wall 140A, 140B. Finally, as in the previous embodiment, the amount of the heat expandable material, its nature and the geometry of the expandable container 128 are chosen so as to ensure an optimal expansion rate of the expandable container 128 (or an optimal compression rate of the heat substrate portion 14).

### THIRD EMBODIMENT OF THE INVENTION

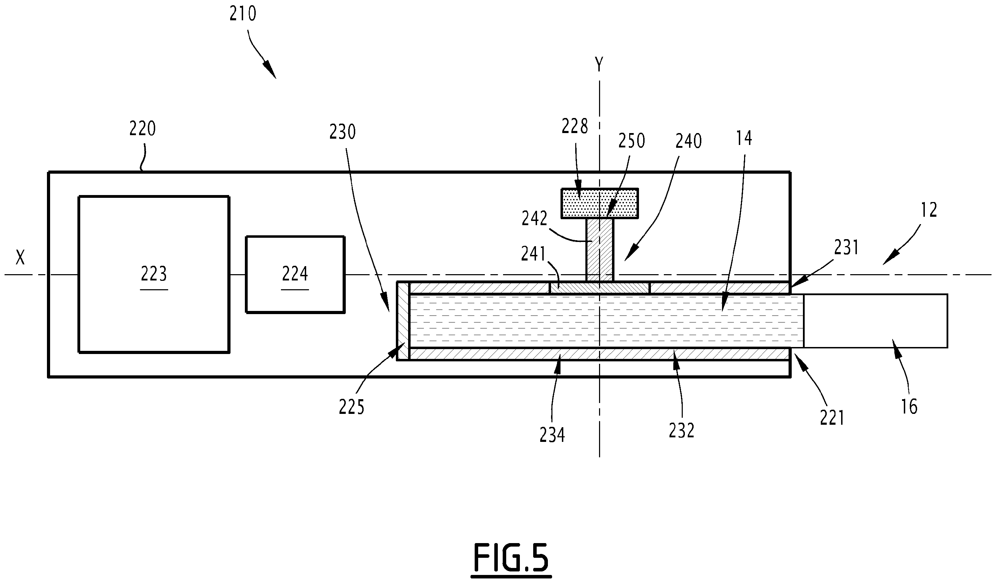

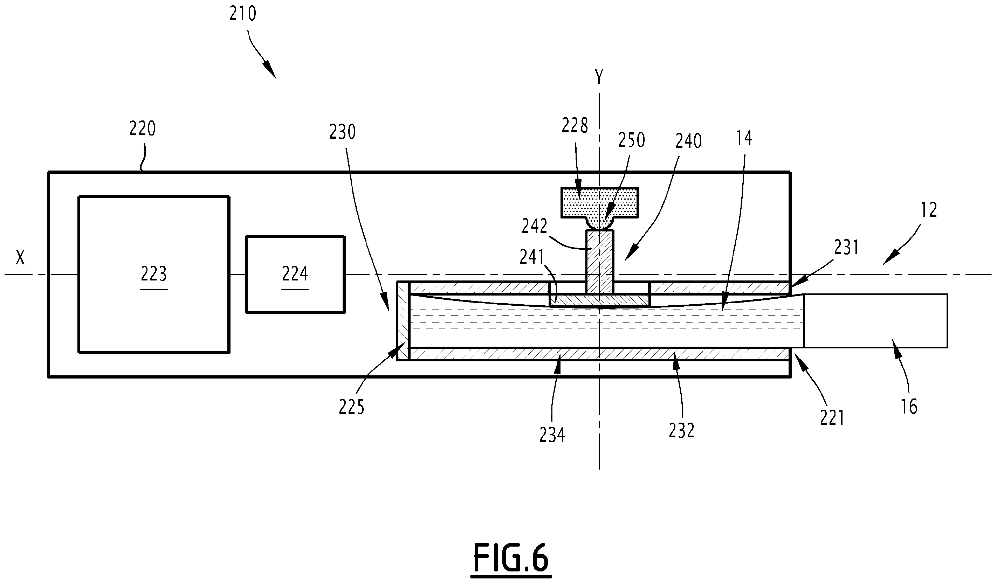

An aerosol generating device 210 according to the third embodiment of the invention is shown on Figures 5 and 6. As in the previous cases, this aerosol generating device 210 is designed to operate with the same consumable article 12 which will not be explained in further detail in relation with this embodiment.

Additionally, as in the previous cases, the aerosol generating device 210 comprises a housing 220 defining an insertion opening 221 suitable for insertion of the consumable article 12 and comprising notably a battery 223, a control module 224, a heating chamber 225 and an expandable container 228. The battery 223 and the control module 224 are similar to the battery 23 and the control module 24 explained above. Moreover, as in the previous cases, the heating chamber 225 is configured to receive and heat at least a part of the consumable article 12 and extends along a chamber axis X between a closed end 230 and an open end 231.

Contrary to the previous cases, the heating chamber 225 may define one or more fixed lateral walls 232 extending along the chamber axis X and intended to be in contact with the substrate portion 14 of the consumable article 12 when it is received inside the heating chamber 225. In this case, the heating chamber 225 may form a cup-shaped heating chamber 225 and comprise a heating element 234 formed by one or several heating resistances integrated into its lateral walls, as it is shown in the examples of Figure 5 and 6. According to other examples, the heating element 234 can be formed by a heating blade explained in relation with the previous embodiments or a coil arranged around the heating chamber 225.

According to the third embodiment of the invention, the heating chamber 225 comprises at least one moveable element forming an actuator 240 configured to protrude from the lateral wall 232 of the heating chamber 225 to compress the substrate portion 14 of the consumable article 12. Particularly, the actuator 240 is connected to the expandable container 228 and is configured to protrude from the lateral wall 232 with expansion of the expandable container 228. In some examples of this embodiment, the heating chamber 225 may comprise several moveable elements extending from one or more lateral walls. For example, when the heating chamber 225 forms a circular tube, the moveable elements can form radial ribs extending from the lateral wall of the chamber 225 to compress at least a part of the substrate portion 14.

In the example of Figures 5 and 6, the actuator 240 comprises a compressing part 241 configured to protrude from the wall 232 according to the transversal axis Y and a guiding part 242 connecting the compressing part 241 with the expandable container 228 and guiding the compressing part 241 according to the transversal axis Y during the expansion of the expandable container 228. The guiding part 142 may be arranged in a cavity extending along the transversal axis Y. Thus, while expansion of the expandable container 228, the guiding part 242 is able to guide the compressing part 241 from a first position (shown on Figure 5) wherein the substrate portion 14 is not compressed to a second position (shown on Figure 6) wherein the substrate portion 14 is compressed. Similarly to the second embodiment of the invention, according to some examples of the third embodiment, biasing means can be used to push the compressing part 241 of the actuator 240 from the second position to the first position when the expandable container 228 is not expanded.

As in the previous embodiments, the expandable container 228 is filled with an expandable material. The internal volume of the expandable container 228 can be delimited by rigid walls defining an opening sealed with an expandable membrane 250. The expandable membrane 250 can be connected directly or indirectly to the guiding part 242 of the actuator 240 to cause its sliding into the cavity along the transversal axis Y. Thus, as it is shown on Figure 6, the expandable membrane 250 can expand into the cavity containing the guiding part 242 of the actuator with expansion of the heat expanding material contained in the container 228. Finally, as in the previous embodiments, the amount of the heat expandable material, its nature and the geometry of the expandable container 228 are chosen so as to ensure an optimal expansion rate of the expandable container 228 (or an optimal compression rate of the heat substrate portion 14).

Other examples of the expandable container 228 are also possible. For example, in case of a plurality moveable elements forming radial ribs, the expandable container 228 can form a unique cylindrical piece arranged around the heating chamber 225 as it was explained in relation with the first embodiment of the invention. Thus, an expansion of the expandable container 228 can cause protruding of each moveable element from the lateral wall.

### FOURTH EMBODIMENT OF THE INVENTION

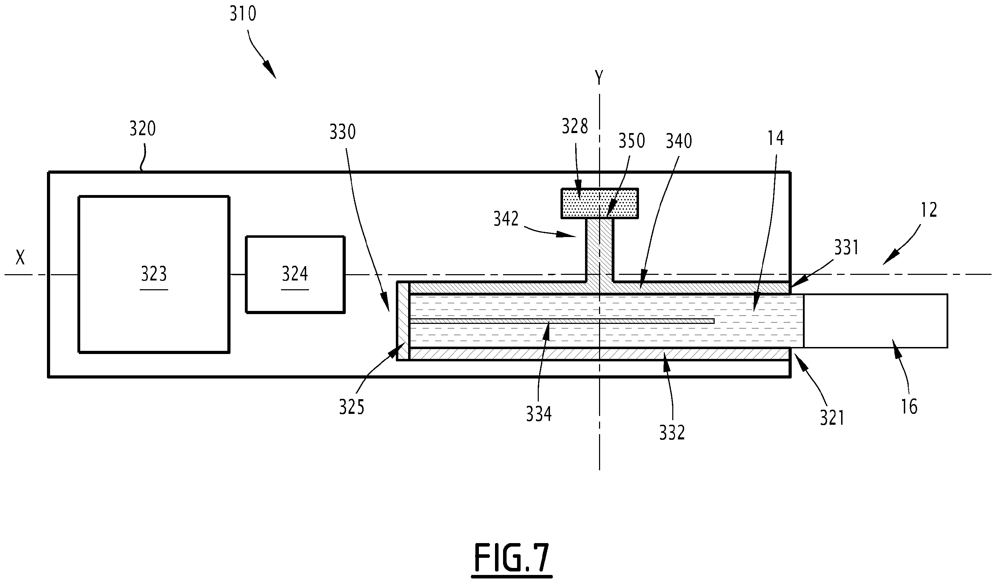

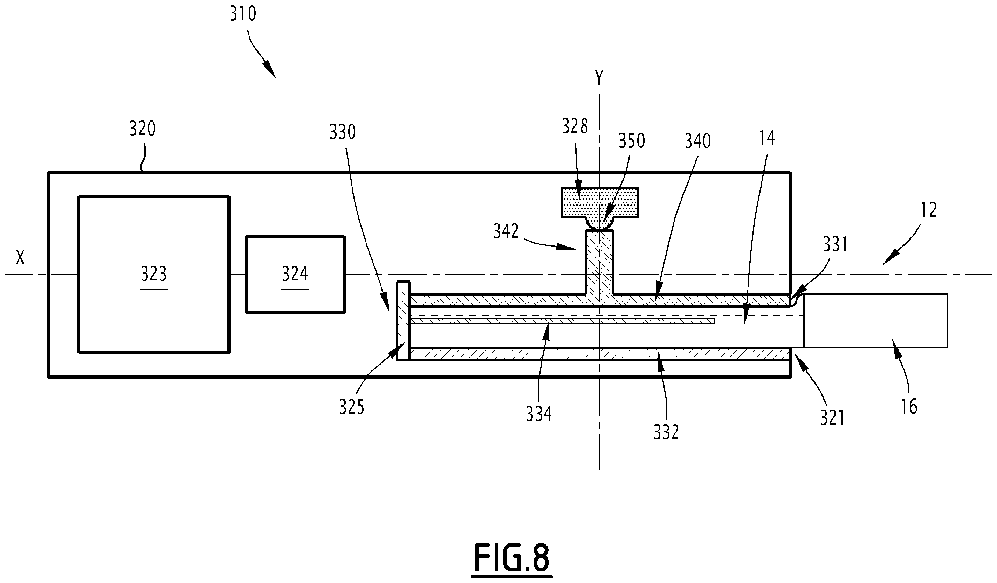

An aerosol generating device 310 according to the fourth embodiment of the invention is shown on Figures 7 and 8. As in the previous cases, this aerosol generating device 310 is designed to operate with the same consumable article 12 which will not be explained in further detail in relation with this embodiment.

Additionally, as in the previous cases, the aerosol generating device 310 comprises a housing 320 defining an insertion opening 321 suitable for insertion of the consumable article 12 and comprising notably a battery 323, a control module 324, a heating chamber 325 and an expandable container 328. The battery 323 and the control module 324 are similar to the battery 23 and the control module 24 explained above. Moreover, as in the previous cases, the heating chamber 325 is configured to receive and heat at least a part of the consumable article 12 and extends along a chamber axis X between a closed end 330 and an open end 331. Moreover, in the examples of Figures 7 and 8, the heating chamber 325 comprises a heating element 334 formed by a heating blade similar to the heating blade explained above. According to other examples, the heating element 324 may be formed by one or several heating resistances integrated into walls of the heating chamber 325 or a coil arranged around the heating chamber 328.

According to the fourth embodiment of the invention, the heating chamber 325 comprises at least one movable element formed by a slidable wall 340 of the chamber 325 connected to an actuator 342. The slidable wall 340 is similar to one of the slidable walls 140A, 140B explained in relation with the second embodiment of the invention. Particularly, according to the fourth embodiment of the invention, the slidable wall 340 is moveable by the actuator 342 along the transversal axis Y from a first position (shown on Figure 7) wherein the substrate portion 14 is not compressed to a second position (shown on Figure 8) wherein the substrate portion 14 is compressed. In some embodiments, the wall 340 can be pushed from the second position to the first position using suitable biasing means.

The actuator 342 connects the slidable wall 340 to the expandable container 328 and is able to slide according to the transversal axis Y with expansion of the expandable container 328. The actuator 342 can slide for example in a cavity formed between the slidable wall 340 and the container 328.

The expandable container 328 is similar to the expandable container 228 explained in reference with the third embodiment of the invention. Particularly, as in the previous case, the expandable container 328 is filled with a heat expandable material. The internal volume of the expandable container 328 can be delimited by rigid walls defining an opening sealed with an expandable membrane 350. The expandable membrane 350 can be connected directly or indirectly to the actuator 342 to cause its sliding along the transversal axis Y. Thus, as it is shown on Figure 8, the expandable membrane 350 can expand into the cavity containing the actuator 342 with expansion of the heat expanding material contained in the container 328.

Finally, as in the previous embodiments, the amount of the heat expandable material, its nature and the geometry of the expandable container 328 are chosen so as to ensure an optimal expansion rate of the expandable container 328 (or an optimal compression rate of the heat substrate portion 14).

### OTHER EMBODIMENTS OF THE INVENTION

Other embodiments of the invention are still possible. For example, these embodiments may comprise any combination of the embodiments disclosed above. Additionally, in these embodiments, the number of the moveable elements and their respective arrangement can be chosen in any suitable way.

## Claims

1. An aerosol generating device (10; 110; 210; 310) configured to operate with a consumable article (12), comprising:
- a heating chamber (25; 125; 225; 325) configured to receive and heat at least a part of the consumable article (12), the heating chamber (25; 125; 225; 325) comprising at least one moveable element;
the aerosol generating device (10; 110; 210; 310) being **characterized in that** it further comprises:
- an expandable container (28; 128; 228; 328) containing a heat expandable material and configured to cause, by expansion of the heat expandable material, the moveable element to compress said part of the consumable article (12) when it is received in the heating chamber (25; 125; 225; 325) and when the heating chamber (28; 128; 228; 328) is operated to heat said part of the consumable article (12).

2. The aerosol generating device (10; 110; 210; 310) according to claim 1, wherein the heat expandable material is sealed inside the expandable container (28; 128; 228; 328).

3. The aerosol generating device (10; 110; 210; 310) according to any one of the preceding claims, wherein the heat expandable material is an alkane.

4. The aerosol generating device (10; 110; 210; 310) according to claim 3, wherein the heat expandable material is a paraffin wax.

5. The aerosol generating device (10; 110; 210; 310) according to any one of the preceding claims, wherein the heat expandable material is chosen to expand during a preheating phase of operation of the heating chamber (25; 125; 225; 325).

6. The aerosol generating device (210) according to any one of the preceding claims, wherein the moveable element forms an actuator (240) configured to extend from a wall (232) of the heating chamber (225).

7. The aerosol generating device (310) according to any one of claims 1 to 5, wherein the moveable element forms a wall (340) of the heating chamber (325) connected to an actuator (342).

8. The aerosol generating device (210; 310) according to claim 6 or 7, wherein said actuator (240; 342) is configured to slide in a cavity further to expansion of the expandable container (228; 328).

9. The aerosol generating device (10) according to any one of claims 1 to 5, wherein the moveable element is formed by a wall (40) of the expandable container (28).

10. The aerosol generating device (110) according to any one of claims 1 to 5, wherein the moveable element forms a wall (140A, 140B) of the heating chamber (125) in contact with a wall of the expandable container (128).

11. The aerosol generating device (10; 110) according to claim 9 or 10, wherein the expandable container (28; 128) forms a thermal insulator between the heating chamber (25; 125) and an external surface of the device (10; 110).

12. The aerosol generating device (10; 110; 210; 310) according to any one of preceding claims, wherein the expandable container (28; 128; 228; 328) defines at least one elastic wall or membrane able to change its shape depending on an expansion rate of the heat expending material.

13. The aerosol generating device (10; 110; 210; 310) according to any one of the preceding claims, wherein the heating chamber (25; 125; 225; 325) extends along a chamber axis (X) between a closed end (30; 130; 230; 330) and an open end (31; 131; 231; 331), the open end (31; 131; 231; 331) defining an opening (21; 121; 221; 321) extending perpendicularly to the chamber axis (X);
the moveable element being moveable substantially perpendicularly to the chamber axis (X).

14. The aerosol generating device (10; 110; 210; 310) according to any one of the preceding claims, wherein the heating chamber (25; 125; 225; 325) further comprises at least one heating element (34; 134; 234; 334), said heating element (34; 134; 234; 334) forming a heating blade arranged inside the heating chamber (25; 125; 225; 325) or one or several heating resistances integrated in the movable element or a coil arranged around the heating chamber (25; 125; 225; 325).

15. The aerosol generating device (10; 110; 210; 310) according to any one of the preceding claims, wherein the heating chamber (25; 125; 225; 325) defines at least two moveable elements facing each other.

## Patentansprüche

1. Aerosolerzeugungsvorrichtung (10; 110; 210; 310), die so konfiguriert ist, dass sie mit einem Verbrauchsartikel (12) arbeitet und Folgendes umfasst:
- eine Heizkammer (25; 125; 225; 325), die so konfiguriert ist, dass sie mindestens einen Teil des Verbrauchsartikels (12) aufnimmt und erhitzt, wobei die Heizkammer (25; 125; 225; 325) mindestens ein bewegliches Element umfasst;
wobei die Aerosolerzeugungsvorrichtung (10; 110; 210; 310) **dadurch gekennzeichnet ist, dass** sie ferner umfasst:
- einen ausdehnbaren Behälter (28; 128; 228; 328), der ein wärmeausdehnbares Material enthält und so konfiguriert ist, dass er durch Ausdehnung des wärmeausdehnbaren Materials das bewegliche Element veranlasst, den Teil des Verbrauchsartikels (12) zusammenzudrücken, wenn er in der Heizkammer (25; 125; 225; 325) aufgenommen wird und wenn die Heizkammer (28; 128; 228; 328) betrieben wird, um den Teil des Verbrauchsartikels (12) zu erhitzen.

2. Aerosolerzeugungsvorrichtung (10; 110; 210; 310) nach Anspruch 1, wobei das wärmeausdehnbare Material innerhalb des ausdehnbaren Behälters (28; 128; 228; 328) versiegelt ist.

3. Aerosolerzeugungsvorrichtung (10; 110; 210; 310) nach einem der vorhergehenden Ansprüche, wobei das wärmeausdehnbare Material ein Alkan ist.

4. Aerosolerzeugungsvorrichtung (10; 110; 210; 310) nach Anspruch 3, wobei das wärmeausdehnbare Material ein Paraffinwachs ist.

5. Aerosolerzeugungsvorrichtung (10; 110; 210; 310) nach einem der vorhergehenden Ansprüche, wobei das wärmeausdehnbare Material so gewählt ist, dass es sich während einer Vorheizphase des Betriebs der Heizkammer (25; 125; 225; 325) ausdehnt.

6. Aerosolerzeugungsvorrichtung (210) nach einem der vorhergehenden Ansprüche, wobei das bewegliche Element einen Aktuator (240) bildet, der so konfiguriert ist, dass er sich von einer Wand (232) der Heizkammer (225) erstreckt.

7. Aerosolerzeugungsvorrichtung (310) nach einem der Ansprüche 1 bis 5, wobei das bewegliche Element eine Wand (340) der Heizkammer (325) bildet, die mit einem Aktuator (342) verbunden ist.

8. Aerosolerzeugungsvorrichtung (210; 310) nach Anspruch 6 oder 7, wobei der Aktuator (240; 342) so konfiguriert ist, dass er in einem Hohlraum gleitet, um den ausdehnbaren Behälter (228; 328) weiter auszudehnen.

9. Aerosolerzeugungsvorrichtung (10) nach einem der Ansprüche 1 bis 5, wobei das bewegliche Element durch eine Wand (40) des ausdehnbaren Behälters (28) gebildet wird.

10. Aerosolerzeugungsvorrichtung (110) nach einem der Ansprüche 1 bis 5, wobei das bewegliche Element eine Wand (140A, 140B) der Heizkammer (125) in Kontakt mit einer Wand des ausdehnbaren Behälters (128) bildet.

11. Aerosolerzeugungsvorrichtung (10; 110) nach Anspruch 9 oder 10, wobei der ausdehnbare Behälter (28; 128) einen thermischen Isolator zwischen der Heizkammer (25; 125) und einer Außenfläche der Vorrichtung (10; 110) bildet.

12. Aerosolerzeugungsvorrichtung (10; 110; 210; 310) nach einem der vorhergehenden Ansprüche, wobei der ausdehnbare Behälter (28; 128; 228; 328) mindestens eine elastische Wand oder Membran definiert, die in der Lage ist, ihre Form in Abhängigkeit von einer Ausdehnungsrate des wärmeausdehnbaren Materials zu ändern.

13. Aerosolerzeugungsvorrichtung (10; 110; 210; 310) nach einem der vorhergehenden Ansprüche, wobei sich die Heizkammer (25; 125; 225; 325) entlang einer Kammerachse (X) zwischen einem geschlossenen Ende (30; 130; 230; 330) und einem offenen Ende (31; 131; 231; 331) erstreckt, wobei das offene Ende (31; 131; 231; 331) eine Öffnung (21; 121; 221; 321) definiert, die sich senkrecht zu der Kammerachse (X) erstreckt;
wobei das bewegliche Element im Wesentlichen senkrecht zur Kammerachse (X) beweglich ist.

14. Aerosolerzeugungsvorrichtung (10; 110; 210; 310) nach einem der vorhergehenden Ansprüche, wobei die Heizkammer (25; 125; 225; 325) ferner mindestens ein Heizelement (34; 134; 234; 334) umfasst, wobei das Heizelement (34; 134; 234; 334) eine innerhalb der Heizkammer (25; 125; 225; 325) angeordnete Heizklinge oder einen oder mehrere in das bewegliche Element integrierte Heizwiderstände oder eine um die Heizkammer (25; 125; 225; 325) angeordnete Spule bildet.

15. Aerosolerzeugungsvorrichtung (10; 110; 210; 310) nach einem der vorhergehenden Ansprüche, wobei die Heizkammer (25; 125; 225; 325) mindestens zwei bewegliche Elemente definiert, die einander gegenüberliegen.

## Revendications

1. Dispositif de génération d'aérosol (10 ; 110 ; 210 ; 310) configuré pour fonctionner avec un article consommable (12) comprenant :
- une chambre de chauffe (25 ; 125 ; 225 ; 325) configurée pour recevoir et chauffer au moins une partie de l'article consommable (12), la chambre de chauffe (25 ; 125 ; 225 ; 325) comprenant au moins un élément mobile ;
le dispositif de génération d'aérosol (10 ; 110 ; 210 ; 310) étant **caractérisé en ce qu'**il comprend en outre :
- un récipient expansible (28 ; 128 ; 228 ; 328) contenant un matériau thermoexpansible et configuré pour amener, par l'expansion du matériau thermoexpansible, l'élément mobile à comprimer ladite partie de l'article consommable (12) lorsqu'il est reçu dans la chambre de chauffe (25 ; 125 ; 225 ; 325) et lorsque la chambre de chauffe (28 ; 128 ; 228 ; 328) est actionnée pour chauffer ladite partie de l'article consommable (12).

2. Dispositif de génération d'aérosol (10 ; 110 ; 210 ; 310) selon la revendication 1, dans lequel le matériau thermoexpansible est scellé à l'intérieur du récipient expansible (28 ; 128 ; 228 ; 328).

3. Dispositif de génération d'aérosol (10 ; 110 ; 210 ; 310) selon l'une quelconque des revendications précédentes, dans lequel le matériau thermoexpansible est un alcane.

4. Dispositif de génération d'aérosol (10 ; 110 ; 210 ; 310) selon la revendication 3, dans lequel le matériau thermoexpansible est une cire de paraffine.

5. Dispositif de génération d'aérosol (10 ; 110 ; 210 ; 310) selon l'une quelconque des revendications précédentes, dans lequel le matériau thermoexpansible est choisi pour se dilater pendant une phase de préchauffage de la chambre de chauffe (25 ; 125 ; 225 ; 325).

6. Dispositif de génération d'aérosol (210) selon l'une quelconque des revendications précédentes, dans lequel l'élément mobile forme un actionneur (240) configuré pour s'étendre à partir d'une paroi (232) de la chambre de chauffe (225).

7. Dispositif de génération d'aérosol (310) selon l'une quelconque des revendications 1 à 5, dans lequel l'élément mobile forme une paroi (340) de la chambre de chauffage (325) reliée à un actionneur (342).

8. Dispositif de génération d'aérosol (210 ; 310) selon la revendication 6 ou 7, dans lequel ledit actionneur (240 ; 342) est configuré pour glisser dans une cavité suite à l'expansion du récipient expansible (228 ; 328).

9. Dispositif de génération d'aérosol (10) selon l'une quelconque des revendications 1 à 5, dans lequel l'élément mobile est formé par une paroi (40) du récipient expansible (28).

10. Dispositif de génération d'aérosol (110) selon l'une quelconque des revendications 1 à 5, dans lequel l'élément mobile forme une paroi (140A, 140B) de la chambre de chauffe (125) en contact avec une paroi du récipient expansible (128).

11. Dispositif de génération d'aérosol (10 ; 110) selon la revendication 9 ou 10, dans lequel le récipient expansible (28 ; 128) forme un isolant thermique entre la chambre de chauffe (25 ; 125) et une surface externe du dispositif (10 ; 110).

12. Dispositif de génération d'aérosol (10 ; 110 ; 210 ; 310) selon l'une quelconque des revendications précédentes, dans lequel le récipient expansible (28 ; 128 ; 228 ; 328) définit au moins une paroi ou membrane élastique capable de changer de forme en fonction d'un taux de dilatation du matériau thermoexpansible.

13. Dispositif de génération d'aérosol (10 ; 110 ; 210 ; 310) selon l'une quelconque des revendications précédentes, dans lequel la chambre de chauffe (25 ; 125 ; 225 ; 325) s'étend le long d'un axe de la chambre (X) entre une extrémité fermée (30 ; 130 ; 230 ; 330) et une extrémité ouverte (31 ; 131 ; 231 ; 331), l'extrémité ouverte (31 ; 131 ; 231 ; 331) définissant une ouverture (21 ; 121 ; 221 ; 321) s'étendant perpendiculairement à l'axe de la chambre (X) ;
l'élément mobile pouvant être déplacé sensiblement perpendiculairement à l'axe de la chambre (X).

14. Dispositif générateur d'aérosol (10 ; 110 ; 210 ; 310) selon l'une quelconque des revendications précédentes, dans lequel la chambre de chauffe (25 ; 125 ; 225 ; 325) comprend en outre au moins un élément chauffant (34 ; 134 ; 234 ; 334), ledit élément chauffant (34 ; 134 ; 234 ; 334) formant une lame chauffante disposée à l'intérieur de la chambre de chauffe (25 ; 125 ; 225 ; 325) ou une ou plusieurs résistances chauffantes intégrées à l'élément mobile ou un serpentin disposé autour de la chambre de chauffe (25 ; 125 ; 225 ; 325).

15. Dispositif de génération d'aérosol (10 ; 110 ; 210 ; 310) selon l'une quelconque des revendications précédentes, dans lequel la chambre de chauffe (25 ; 125 ; 225 ; 325) définit au moins deux éléments mobiles se faisant face.
